Europäisches Patentamt

**European Patent Office**

**Office européen des brevets**

(19)

(11) Veröffentlichungsnummer: **0 135 848**
A2

(12) # EUROPÄISCHE PATENTANMELDUNG

(21) Anmeldenummer: **84110438.3**

(22) Anmeldetag: **03.09.84**

(51) Int. Cl.⁴: **C 08 L 77/00**

(30) Priorität: **13.09.83 DE 3332924**

(43) Veröffentlichungstag der Anmeldung: **03.04.85**
**Patentblatt 85/14**

(84) Benannte Vertragsstaaten: **DE FR GB IT**

(71) Anmelder: **BAYER AG, Konzernverwaltung RP**
**Patentabteilung, D-5090 Leverkusen 1 Bayerwerk (DE)**

(72) Erfinder: **Richter, Wolfgang, Dr., Scheiblerstrasse 111,**
**D-4150 Krefeld (DE)**
Erfinder: **Buysch, Hans-Josef, Dr., Brandenburger**
**Strasse 28, D-4150 Krefeld (DE)**
Erfinder: **Brassat, Bert, Dr., Bethelstrasse 24,**
**D-4150 Krefeld (DE)**
Erfinder: **Merten, Josef, Dr., Krünsend 30,**
**D-4052 Korschenbroich (DE)**
Erfinder: **Haupt, Heinrich, Dr., Bodelschwinghstrasse 15,**
**D-4150 Krefeld (DE)**

(54) **Kerbschlagzähe, in der Schmelze leichtfliessende Polyamidformmassen.**

(57) Kerbschlagzähe, in der Schmelze leichtfließende Polyamidformmassen hoher Steifigkeit, die aliphatische, in der C-Kette im wesentlichen unverzweigte Polycarbonate enthalten.

EP 0 135 848 A2

BAYER AKTIENGESELLSCHAFT          5090 Leverkusen, Bayerwerk
Konzernverwaltung RP
Patentabteilung                   Str/em-c

Kerbschlagzähe, in der Schmelze leichtfließende Polyamidformmassen

Gegenstand der vorliegenden Erfindung sind kerbschlagzähe,
in der Schmelze leichtfließende Polyamidformmassen hoher
Steifigkeit, die aliphatische, in der C-Kette im wesentlichen unverzweigte Polycarbonate enthalten.

Spritzfrische teilkristalline Polyamide erreichen ihre
maximale Zähigkeit erst nach einer Konditionierung durch
Wasseraufnahme.

Um die durch Luftfeuchtigkeit eintretende natürliche
Konditionierung von teilkristallinen Polyamiden abzukürzen und um von Anfang an optimale Eigenschaften zu erzielen, werden die fertigen PA-Formteile zweckmäßigerweise in Tauchbecken - je nach Materialstärke mehrere
Stunden bis Tage - mit warmem Wasser behandelt, bis sie
ungefähr 3 % Wasser aufgenommen haben.

Dieser 3 %ige Wassergehalt entspricht der Wasseraufnahme bei 50 % rel. Luftfeuchtigkeit. Danach ist in
der Regel noch eine längere Lagerung in feuchter Atmosphäre notwendig, um zu gewährleisten, daß die ober-

Le A 22 553-EP

flächlich eingedrungenen Wassermoleküle sich im gesamten Formstück gleichmäßig verteilen. Dies macht deutlich, daß insbesondere für große Formteile und hohe Stückzahlen ein erheblicher Energie-, Zeit- und Investitionsaufwand notwendig ist.

Es wurde daher versucht, auch ohne die aufwendige Wasserkonditionierung durch nieder- oder makromolekularer Modifikation sofort nach dem Verspritzen kerbschlagzähe, teilkristalline Polyamide zu erhalten.

Als niedermolekulare Weichmacher wurden dabei (Di-)Carbonsäureester wie Stearinsäureoctylester, p-Hydroxybenzoesäureester (JA 48-60750), Phthalsäuredioctylester, Benzoesäureethylester (DOS 1 912 111) sowie phenolische Verbindungen wie 4-Nonylphenol, 4-Methyl-2,6-di-tert.-butylphenol (DOS 1 912 111) oder Mischungen beider Stoffklassen verwendet. Bekannt ist auch die Kerbschlagzähigkeitsverbesserung von Polyamiden durch N-Methylpyrrolidon (DOS 1 911 468) und N-Methyl-benzolsulfonamid. Als zusätzlich erwünschter Effekt sinkt dabei die Schmelzviskosität und ermöglicht das Spritzgießen des Materials auch in feine Hohlräume und vom Einspritzort weit entfernte Stellen.

Ein Nachteil der mit Weichmachern versetzten Polyamide ist jedoch ihre geringe Steifigkeit. Ein mit ca. 10 % N-Methylbenzolsulfonamid versetztes Polyamid besitzt im Vergleich zu unmodifiziertem Polyamid mit 3000 MPa einen Zug-E-Modul von nur noch 1040 MPa.

Le A 22 553

Ein weiterer entscheidender Nachteil der niedermolekularen Weichmacher beruht auf der Tatsache, daß sie im Laufe der Zeit ausschwitzen, zu einer unsauberen Oberfläche führen und sich die Eigenschaftswerte infolge Migration verändern. Die Bemühungen konzentrierten sich aus diesem Grunde hauptsächlich auf das Auffinden hochmolekularer Kerbschlagzähigkeitsmodifikatoren. So werden Polyethylene oder Ethylen-Vinylacetat-Copolymerisaten zur Verbesserung der Kerbschlagzähigkeit empfohlen (JA 52-104 567). Den Mischungen haftet jedoch aufgrund der Unverträglichkeit des Copolymeren mit Polyamiden der Nachteil an, daß sie zu Weißbruch neigen. Außerdem nimmt die Fließfähigkeit derart modifizierter Polyamide drastisch ab.

Dies beobachtet man auch bei Modifizierung mit anderen Ethylen-Copolymere, wie z.B. in der DOS 2011 608 gelehrt wird. Aromatische Polycarbonate führen nach SU 540 895 ebenfalls zu beträchtlicher Schmelzviskositätserhöhung der Polyamidlegierung. Daher sind diese Mischungen im Spritzguß nur mit erheblichem Mehraufwand verarbeitbar.

In der DOS 2 931 689 sind zur Zähigkeitsverbesserung von verstärkten Polyamiden thermoplastische Polyurethane, z.B. aus aromatischen, bzw. aliphatischen Diisocyanaten und 2 - 4 OH-Gruppen aufweisenden Hydroxylverbindungen beschrieben.

Unter anderen werden zur Herstellung der Polyurethane auch OH-Gruppen aufweisende Polycarbonate verwendet.

Le A 22 553

Diese Verbindungen und die damit hergestellten Formmassen genügen den Anforderungen nicht. So können sich Mischungen von teilkristallinen Polyamiden und Polyurethanen bei den üblichen Extrusionsbedingungen unter Gasentwicklung leicht zersetzen und zu fehlerhaften Formkörpern führen. Außergem zeigt sich, daß trotz des beträchtlichen Molekulargewichtsabbaus des Polyamids durch die Modifizierung die Fließfähigkeit nicht entscheidend verbessert wird.

Überraschenderweise wurde nun gefunden, daß durch Einsatz von aliphatischen, in der C-Kette im wesentlichen unverzweigten Polycarbonaten Polyamidformmassen ohne die geschilderten Nachteile erhalten wurden.

Gegenstand der Erfindung sind daher thermoplastische Formmassen aus

I    98 - 70 Gew.-%, bevorzugt 95 - 80 Gew.-%, bezogen auf die Summe der Komponenten I und II, wenigstens eines teilkristallinen Polyamids und

II   2 - 30 Gew.-%, bevorzugt 5 - 20 Gew.-%, bezogen auf die Summe der Komponenten I und II, wenigstens eines aliphatischen, in der C-Kette im wesentlichen unverzweigten Polycarbonats

und gegebenenfalls üblichen Hilfs- und Verstärkungsstoffen.

Teilkristalline Polyamide im Sinne der Erfindung sind Polyamid-6, -11 und -12 Dicarbonsäuren wie 6,6- und 6,10-Polyamid. Vorzugsweise werden 6- und 6,6-Polyamid oder deren Mischungen verwendet.

Le A 22 553

Als Komponente II können eingesetzt werden:
aliphatische Polycarbonate hergestellt aus aliphatischen
Polyolen, vorzugsweise Diolen und deren Mischungen mit
3-200 C-Atomen, wie z.B. Propandiol-1.3, Butandiol-1.4,
Hexandiol-1.6, Diethylenglykol, Dipropylenglykol, Tri-,
Tetra- bzw. Octaethylenglykol sowie Polyalkylenglykole,
Polypropylenglykole, Polyethylen/propylenglykole, Polytetrahydrofurane und Dialkyl bzw. Diarylcarbonaten z.B.
Diphenylcarbonat oder Phosgen. Bevorzugt werden Diole mit
4-100 C-Atomen zur Herstellung verwendet. Besonders bevorzugt sind Polycarbonate hergestellt aus 100-1 Gew.-% Hexandiol-1.6 und 0 - 99 Gew.-% Oligo- bzw. Polyalkylenglykol mit 4-100 C-Atomen, insbesondere solche aus 100 - 75
Gew.-% Hexandiol-1.6 und 0 - 25 Gew.-% Oligo- bzw. Polyalkylenglykolen mit 4-100 C-Atomen als OH-gruppenhaltige
Komponente.

Aliphatische, in der C-Kette im wesentlichen unverzweigte Polycarbonate im Sinne der Erfindung sind auch aliphatische Polycarbonate, die bis zu 10 %, vorzugsweise
bis zu 5 %, Verzweigungsstellen enthalten. Derartige
Polycarbonate entstehen, wenn man ≧ 3-wertige Alkohole,
wie Trimethylolpropan, Pentaerythrit oder ähnliche oder
verzweigte Polyalkylenglykole - hergestellt aus Ethylenoxid und/oder Propylenoxid und mit ≧ 3-wertigen Alkoholen gestartet - während der Kondensation zusetzt.

Die erfindungsgemäße, aliphatischen Polycarbonate sind
nach literaturbekannten Verfahren aus den angegebenen

Le A 22 553

Diolen und Kohlensäureestern, Chlorameisensäureestern oder Phosgen herstellbar /z.B. J. Amer. Chem. Soc. 80, 4596 (1958), J. Amer. Chem. Soc. 55, 5031 (1933), J. Amer. Chem. Soc. 52, 314 (1930), Houben-Weyl, Methoden der Org. Chemie, Bd. VIII, S. 106 f, 109 (1952)/und sollen Molekulargewichte Mn im Bereich von 1000 bis 100000, vorzugsweise von 2000 bis 50000, insbesondere von 2500 bis 30000 (bestimmt durch OH-Gruppen-Bestimmung oder Gelchromatographie) aufweisen.

Die Einarbeitung der Polycarbonat erfolgt bei Temperaturen oberhalb vom Schmelzpunkt des eingesetzten Polyamids, bevorzugt bei Temperaturen von 200 - 300°C, insbesondere bei 240 - 290°C unter Verwendung bekannter Mischvorrichtungen, wie Extruder, Kneter, statische Mischer. Zusätzlich können den Polyamiden verschiedene übliche Zuschläge wir Gleit- und Entformungsmittel, Nucleierungsmittel, Pigmente, Farbstoffe, Stabilisatoren, Kristallisationsbeschleuniger, Füllstoffe wie Glas- und Asbestfasern, Mikrokugeln aus Glas, Talkum, Siliciumdioxid oder Glimmer sowie Antistatika in bekannten Mengen beigegeben werden.

Derart modifizierte Polyamide lassen sich leicht verspritzen und die daraus hergestellten Formkörper zeichnen sich durch gute Oberflächenbeschaffenheit und verbesserte Kerbschlagzähigkeit bei hoher Steifigkeit aus. Weder im fertigen Teil noch in der Schmelze tritt Entmischung der Polymerkomponenten ein.

Zudem stellte sich überraschend heraus, daß die hergestellten Spritzlinge gleichmäßig durchkristallisiert waren, wobei ihre Sphärolithgröße unter 1µ lag. Die hohe isotrope Kristallinität des Materials nach Verspritzen gewährleistet, daß die daraus hergestellten Formteile sich nicht infolge nachträglicher Kristallisation (Sphärolithbildung) verziehen. Durch die Kristallisationsfreudigkeit und der damit verbundenen guten Entformbarkeit sind obendrein rasche Spritzcyclen möglich.

Die erfindungsgemäßen Polyamidformmassen können zu Formkörpern mit sehr guter Zähigkeit im spritzfrischen Zustand verarbeitet werden, beispielsweise zu Schutzhelmen, da aufgrund des großen Oberfläche/Wandstärke-Verhältnisses für Schutzhelme ein besonders leichtfließendes thermoplastisches Spritzgußmaterial benötigt wird, das außerdem aus Sicherheitsgründen auch eine hohe Seitensteifigkeit und gute Schlag- und Kerbschlagzähigkeit im spritzfrischen Zustand aufweist. Die in den Beispielen angegebenen Prozente sind Gew.-%.

Le A 22 553

- 8 -

## Beispiele

### Polycarbonat A

1.5 kg (0,7 Mol*) Polyhexamethylencarbonat ($M_N$= 2138; OH-Zahl: 52.5) werden mit 1.5 kg (1.9 mmol) Titantetra-n-dodecylat versetzt, unter Rühren auf 180°C erhitzt, und im Laufe von 4 h werden bei 0,6 - 3,5 mbar unter Temperatursteigerung auf 250°C 69.3 g (586 mmol) Hexandiol abdestilliert. Der Rückstand (1420 g Polyhexamethylencarbonat) wird nach Erkalten in einer Mühle geschrotet.

| | |
|---|---|
| Schmelzbereich: | 55 - 60°C |
| OH-Zahl: | 26 |
| Molekulargewicht ($M_N$): | 4300 |

* Unter der Mol-Angabe des polydispersen Systems wird verstanden:

$$\text{Mole} = \frac{\text{Mol OH-Gruppen}}{\text{Funktionalität d. Polymeren}} = \frac{\text{OH-Zahl x Einwaage in kg}}{56.11 \text{ x Funktionalität}}$$

Die Funktionalität des eingesetzten Polyhexamethylencarbonats beträgt 2.

Le A 22 553

## Polycarbonat B

1.2 kg (0.6 Mol*) Polyhexamethylencarbonat ($M_N$= 2000; OH-Zahl 56) werden mit 233 g (1.2 Mol) Tetraethylenglykol sowie 371.3 g (1.73 Mol) Diphenylcarbonat versetzt und unter Rühren innerhalb von 9 h bei 122 - 240°C / 16 - 0.2 mbar 405.9 g Destillat abgetrennt. Der Rückstand wird nach Erkalten in einer Mühle geschrotet.

| | |
|---|---|
| Schmelzbereich: | 40 - 50°C |
| Molekulargewicht ($M_N$): | 6100 |

## Polycarbonat C

1.6 kg (0.8 Mol*) Polyhexamethylencarbonat ($M_N$= 2000; OH-Zahl 56) werden mit 296 g (0.8 Mol) Polyethylenglykol (Octaethylenglykol-Homologengemisch) sowie 325.6 g (1.52 Mol) Diphenylcarbonat versetzt und unter Rühren im Laufe von 14 h bei 120 - 238°C / 13 - 4 mbar 332.6 g Destillat abgetrennt. Der Rückstand wird nach Erkalten in einer Mühle geschrotet.

| | |
|---|---|
| Schmelzbereich: | 45 - 50°C |
| Molekulargewicht ($M_N$): | 3600 |

## Polycarbonat D

1282 g (0.6 Mol*) Polyhexamethylencarbonat ($M_N$= 2138;

Le A 22 553

OH-Zahl 52.5) werden mit 180 g (0.3 Mol) eines mit Propylenglykol gestarteten Ethylenoxid-Polyetherdiols ($M_N$= 600, prim. OH  90 %) sowie 180 g (0.84 Mol) Diphenylcarbonat versetzt und bei 144 - 236°C / 0.6 - 2.5 mbar innerhalb 7.5 h 195.6 g Destillat abgetrennt. Der Rückstand wird nach Erkalten in einer Mühle geschrotet.

Schmelzbereich:                      55 - 65°C
Molekulargewicht ($M_N$):            5200

Le A 22 553

0135848

Beispiele 1-4

Formmassen aus 90 Gew.-% Polyamid 6 und jeweils 10 Gew.-% eines Polycarbonats A - D wurden bei 250°C Massetemperatur auf einem Doppelwellen-Schneckenextruder vom Typ ZSK 53 der Fa. Werner und Pfleiderer homogenisiert. Der extrudierte Strang wurde im Wasserbad abgesponnen, granuliert, das Granulat bei 80°C im Vakuum getrocknet und anschließend zu den Prüfkörpern verspritzt. Die Eigenschaften der modifizierten Polyamide sind in Tabelle 1 zusammengefaßt und vergleichsweise den Werten für unmodifiziertes Polyamid-6 gegenübergestellt.

Vergleichsbeispiel I

90 Gew.-% des in den Beispielen 1 - 4 verwendeten PA-6 und 10 Gew.-% eines aromatischen Polycarbonats aus Bisphenol A und Phosgen werden wie in Beispielen 1 - 4 angegeben homogenisiert. Das so erhaltene Material ist unbrauchbar, um Formkörper herzustellen (stark aufgebläht, gelb verfärbt).

Le A 22 553

## Tabelle 1

| Beispiele | | 1 | 2 | 3 | 4 | Vergleich I |
|---|---|---|---|---|---|---|
| Polyamid-6 | 100 Gew% | 90 Gew% | 90 Gew% | 90 Gew% | 90 Gew% | 90 Gew% |
| Polycarbonat/ Gew-% | – | A/10 | B/10 | C/10 | D/10 | 10 |
| DIN 53453 | Kerbschlagzk. (spritzfrisch) $a_K$ kJ/m² | 2.9 | 8.1 | 8.0 | 7.7 | 9.4 |
| DIN 53457 | Zug-E-Modul (spritzfrisch) GPa | 2.41 | 2.48 | 2.34 | 2.46 | 2.47 |
| * | Fließlänge cm | 37 | 64 | 51 | 57 | 70 |
| | rel. Viskosität $\eta_{rel}$, gemessen an einer 1 %igen Lösung in m-Kresol bei 25°C | 3.64 | 3.43 | 3.74 | 3.66 | 3.53 |

*) Die Fließlänge stellt ein Maß für die Fließfähigkeit von Polyamid-Schmelzen dar. Sie wird ermittelt, indem ein auf 90°C geheiztes Spiralwerkzeug (Spirale: 1000 mmx4 mmx2,5 mm) von der Mitte her mit der Polymerschmelze (260°C) unter einem Druck von 72 bar angespritzt wird. Den Weg, den die Schmelze unter diesen Bedingungen zurücklegt, gemessen in cm, bezeichnet man als Fließlänge.

Aus Tabelle 1 ersieht man, daß die erfindungsgemäßen Modifikatoren zu Polyamiden wesentlicher erhöhter Kerbschlagzähigkeit bei großer Fließlänge und nahezu unverminderter Steifigkeit führen, ohne die relative Viskosität zu beeinträchtigen.

Le A 22 553

Patentansprüche

1. Thermoplastische Formmassen aus
   I) 98 - 70 Gew.-%, bezogen auf die Komponenten I und II, wenigstens eines teilkristallinen Polyamids und

   II) 2 - 30 Gew.-%, bezogen auf die Komponenten I und II, wenigstens eines aliphatischen, in der C-Kette im wesentlichen unverzweigten Polycarbonats und gegebenenfalls übliche Hilfs- und Verstärkungsstoffe.

2. Formmassen nach Anspruch 1, dadurch gekennzeichnet, daß die aliphatischen Polycarbonate ein Molekulargewicht $M_N$ von 1000 bis 100 000 aufweisen.

3. Formmassen nach Anspruch 2, dadurch gekennzeichnet, daß die aliphatischen Polycarbonate ein Molekulargewicht von 2000 bis 50 000 aufweisen.

4. Formmassen nach Ansprüchen 1 - 3, dadurch gekennzeichnet, daß die aliphatischen Polycarbonate unter Einsatz aliphatischer Diole und/oder Polyetherdiole mit 3 - 200 C-Atomen hergestellt wurden.

5. Formmassen nach Ansprüchen 1 - 4, dadurch gekennzeichnet, daß die aliphatischen Polycarbonate unter Einsatz von 100 - 1 Gew.-% Hexandiol-1.6 und 0-99 Gew.-% Oligo- bzw. Polyalkylenglykolen mit 4 - 100 C-Atomen hergestellt wurden.

Le A 22 553

6. Formmassen nach Ansprüchen 1 - 5, dadurch gekennzeichnet, daß die aliphatischen Polycarbonate unter Einsatz von 100 - 75 Gew.-% Hexandiol-1.6 und 0 - 25 Gew.-% Oligo- bzw. Polyalkylenglykolen mit 4 - 100 C-Atomen hergestellt werden.

7. Formmassen nach Ansprüchen 1 - 6, dadurch gekennzeichnet, daß das aliphatische Polycarbonat Polyhexamethylencarbonat oder Polytetramethylencarbonat ist.

8. Formmassen nach Ansprüchen 1-7, dadurch gekennzeichnet, daß sie 95-80 Gew.-% der Komponente I und 5-20 Gew.-% der Komponente II enthalten.

9. Formmassen nach Ansprüchen 1-8, dadurch gekennzeichnet, daß als Komponente I Polyamid-6, Polyamid-6,6 oder deren Mischungen verwendet werden.

10. Schutzhelme aus Formmassen nach Ansprüchen 1-9.

Le A 22 553